# EUROPEAN PATENT SPECIFICATION

(11) **EP 4 414 875 B1**
(45) Date of publication and mention of the grant of the patent: **28.01.2026**
(21) Application number: 23215058.1
(22) Date of filing: 07.12.2023
(51) Int. Cl.: G06F 21/55, G06F 21/57, H04L 9/40

(54) **SYSTEMS AND METHODS FOR DETECTING ATTACK VECTORS TO APPLICATION DATA**
SYSTEME UND VERFAHREN ZUR ERKENNUNG VON ANGRIFFSVEKTOREN AUF ANWENDUNGSDATEN
SYSTÈMES ET PROCÉDÉS DE DÉTECTION DE VECTEURS D'ATTAQUE À DES DONNÉES D'APPLICATION

(30) Priority: 13.02.2023 US 202363484632 P; 31.05.2023 US 202318326402
(43) Date of publication of application: 14.08.2024
(73) Proprietor: Cisco Technology, Inc., San Jose, CA 95134-1706 (US)
(72) Inventor: RACA, Mirko, 1000 Lausanne (CH); NAPPER, Jeffrey, 2628 BG Delft (NL); YANNUZZI, Marcelo, 1485 Nuvilly Canton de Fribourg (CH); BOSCH, Hendrikus, 1432 MN Aalsmeer (NL)
(74) Representative: Warren, Caroline Elisabeth

(56) References cited:
- CN-A- 114 021 040
- CN-B- 113 014 549
- US-A1- 2022 300 653

## Description

### TECHNICAL FIELD

The present disclosure relates generally to application security monitoring, and more particularly, to detecting attack vectors to application data.

### BACKGROUND

Certain cybersecurity flaws are publicly known. For example, Common Vulnerabilities and Exposures (CVE) publishes a list of publicly available cybersecurity flaws. However, vulnerabilities for which there is no CVE or known attack vector may remain undetected. Further, there is a challenge to identify deviations from programmed behavior on application data flows between application services.
CN 113 014 549 discloses HTTP-based malicious classification methods. CN 114 021 040 discloses malicious event alarm.

### BRIEF DESCRIPTION OF THE DRAWINGS

FIG. 1 illustrates an example system for leveraging telemetry to detect vulnerabilities, in accordance with certain embodiments.
FIG. 2 illustrates an example system for detecting attack vectors for application data, in accordance with certain embodiments.
FIG. 3 illustrates an example method for generating a context between application services, in accordance with certain examples.
FIG. 4 illustrates an example method for context detection, in accordance with certain examples.
FIG. 5 illustrates an example method for analyzing flagged spans, in accordance with certain examples.
FIG. 6 illustrates an example method for determining a flagged span as an attack vector, in accordance with certain examples.
FIG. 7 illustrates an example computer system, in accordance with certain embodiments.

### DESCRIPTION OF EXAMPLE EMBODIMENTS

### OVERVIEW

Aspects of the invention are set out in the independent claims and preferred features are set out in the dependent claims. Features of one aspect may be applied to each aspect alone or in combination with other features.

In particular embodiments, a system may include one or more processors and one or more computer-readable non-transitory storage media coupled to one or more of the processors. The one or more computer-readable non-transitory storage media may include instructions operable, when executed by one or more of the processors, to cause the system to receive a marked span that has been flagged for inspection. The instructions are further operable, when executed by the one or more processors, to cause the system to conduct a root cause analysis to determine if the marked span should be classified as an attack. The instructions are further operable, when executed by the one or more processors, to cause the system to determine whether the marked span engaged with data corresponding to one or more application services defining the marked span in response to a determination that the marked span should be classified as an attack. The instructions are further operable, when executed by the one or more processors, to cause the system to designate the data corresponding to the one or more application services as compromised in response to a determination that the marked span did engage with said data.

In particular embodiments, a method, by a system, for detecting an unknown attack vector may include receiving a marked span that has been flagged for inspection. The method further includes conducting a root cause analysis to determine if the marked span should be classified as an attack. In response to a determination that the marked span should be classified as an attack, the method further includes determining whether the marked span engaged with data corresponding to one or more application services defining the marked span. The method further includes designate the data corresponding to the one or more application services as compromised in response to a determination that the marked span did engage with said data.

In particular embodiments, one or more computer-readable non-transitory storage media may embody software that is operable, when executed by a processor, to receive a marked span that has been flagged for inspection. The software may be further operable, when executed, to conduct a root cause analysis to determine if the marked span should be classified as an attack. The software may be further operable, when executed, to determine whether the marked span engaged with data corresponding to one or more application services defining the marked span in response to a determination that the marked span should be classified as an attack. The software may be further operable, when executed, to designate the data corresponding to the one or more application services as compromised in response to a determination that the marked span did engage with said data.

Technical advantages of certain embodiments of this disclosure may include one or more of the following. Certain systems and methods described herein may increase data security and protect from unauthorized extraction of sensitive data by unknown attack vectors. This disclosure provides systems and methods to capture, catalog, encode, instrument, and propagate attestable contexts when application services interact with sensitive data at rest.

Other technical advantages will be readily apparent to one skilled in the art from the following figures, descriptions, and claims. Moreover, while specific advantages have been enumerated above, various embodiments may include all, some, or none of the enumerated advantages.

### EXAMPLE EMBODIMENTS

The embodiments described herein provide for detecting attack vectors to application data belonging to application services. The present disclosure contemplates systems and methods to capture, catalog, encode, instrument, and propagate attestable contexts when application services interact with sensitive data, in certain examples at rest. In certain embodiments, a system and method for leveraging telemetry to detect vulnerabilities is provided. The method includes analyzing spans, generating contexts, storing the contexts in a context catalog, and integrating the contexts into a continuous integration (CI) pipeline by a context generator during a learning phase. The system and method also include analyzing a service, determining whether the service is an unknown/unexpected context, marking/flagging the span for investigation, determining whether to deny the service, and determining whether to enforce a policy by a distributed incident detection module. The system and method further include receiving a marked span, conducting a root cause analysis to determining if the incident should be classified as an attack, determining whether the incident is considered an attack, and depending on the response, either removing the mark from the span or marking the incident for investigation by a span investigation module.

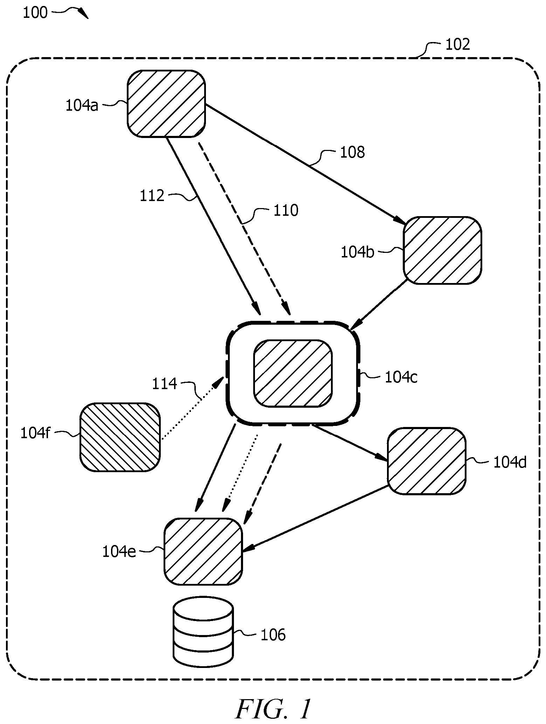

FIG. 1 illustrates illustrates an example system 100 for leveraging telemetry to detect vulnerabilities. System 100 may include one or more application services (and/or microservices) located in a cloud infrastructure 102. For example, there may be a plurality of microservices 104 located within the cloud infrastructure 102 (such as microservice 104a through microservice 104f, where there may be any suitable integer of microservices). In one or more embodiments, application data 106 may be associated with or correspond to certain microservices 104. Without limitations, the application data 106 may include personally identifiable information (PII) and/or payment card industry (PCI) data. The microservices 104 and application data 106 may be subject to the owner's control (e.g., a data controller or a data processor).

In certain embodiments, preemptive mechanisms include leveraging telemetry that can be instrumented in microservices 104 (e.g., application services). Such telemetry may allow system 100 to capture distributed tracing/logging to/from databases and assets with sensitive data (e.g., application data 106 at rest (e.g., using OpenTelemetry)). For example, there may be a service call invoked at any one of the microservices 104 to access the application data 106 of another microservice 104, and the system 100 may be configured to monitor and analyze the communication pathways between each microservice 104 (i.e., a "span"). As disclosed herein, a span may be the invoked service call path between at least two microservices 104 to access certain application data 106, and each span may be stored in the system 100 for reference in detecting unknown attack vectors from an external entity. A span can contain sub-spans in a tree-like structure - having one root span, and any number of child span layers. One span can be generated with code running on just one service 104a, but can also invoke other sub-spans if service 104a calls on the functionality of other services 104.

As illustrated in FIG. 1, a service call invoked at microservice 104a to access the application data 106 of microservice 104e may correspond to three individual spans 108, 110, and 112. Parent span 108 includes, as sub-spans, communications from microservice 104a to microservice 104b, then to microservice 104c, and then to microservice 104e. Parent span 110 includes, as sub-spans, communications from microservice 104a to microservice 104c, and then to microservice 104e. Parent span 112 includes, as sub-spans, communications from microservice 104a to microservice 104c, then to microservice 104d, and then to microservice 104e.

As illustrated, the system 100 may be exposed to an unknown span 114 that includes communications from microservice 104f to microservice 104c and then to microservice 104e. In embodiments, the system 100 may not know the identity of the microservice 104f and may monitor the span 114 as it propagates through the cloud infrastructure 102. In certain embodiments, the system 100 may determine that the span 114 is an attack vector and deny the microservice 104f access to the application data 106.

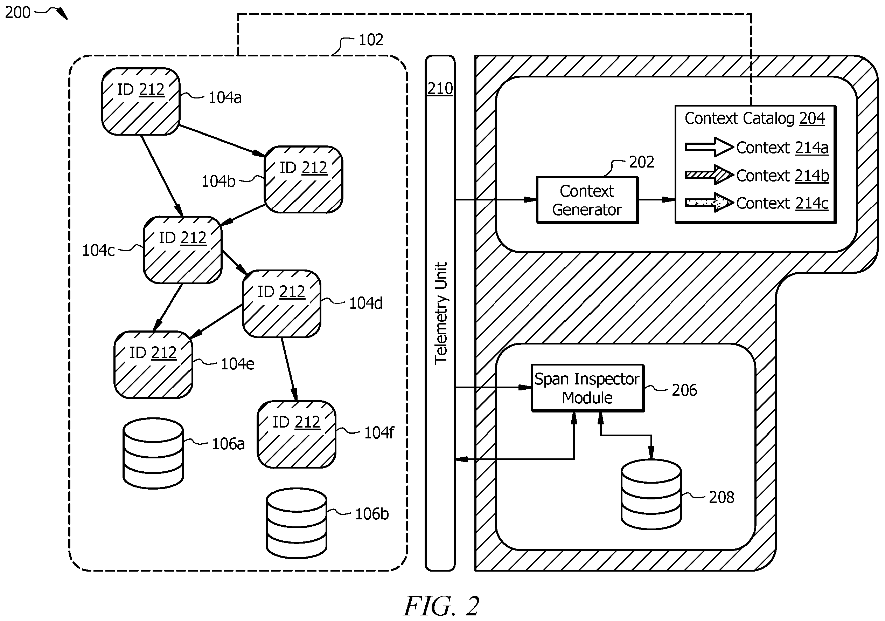

In embodiments, preemptive mechanisms may include creating patterns of programmed behavior. The programmed behavior may be learned, cataloged, and/or captured as contexts (e.g., context 214a, context 214b, and/or context 214c as shown in FIG. 2) in a context catalog (e.g., during testing, staging, and/or in production). Such contexts may represent a template for spans, considering one span per invocation path. More specifically, once such patterns are learned, they may be integrated into the CI pipeline in order to be propagated as contexts. In certain embodiments, this is done using World Wide Web Consortium (W3C) trace context. The traceparent field may ensure interoperability across telemetry tools. The tracestate field may allow the addition of App-specific context in the form of key-value pairs (KVPs). For example, a simple KVP may be: (DS1.1, GET_PII), (DS1.2, PUT_PII), (DS1.3, POST_PII), etc., which may represent some of the cataloged contexts. In some embodiments, KVPs may include a sequenced list of members. The sequenced list of members may include the request's position in a distributed tracing graph. For example, W3C's tracestate context supports lists of members to convey vendor-specific context. The purpose herein may be to carry an attestable list of microservices 104 associated to the context carried and propagated in the headers through the application services. For each given context, the microservice 104 may know its predecessor and its potential successor, wherein contexts might be signed and hence cannot be forged.

In certain embodiments, preemptive mechanisms include allowing contextual analysis and/or deterministic detection of unclassified patterns (e.g., deviations from known/classified contexts) (such as span 114). For example, system 100 may automatically check for contexts on service invocation, and, upon detecting an unexpected behavior (e.g., a context ID not present in the CI-generated list), the system 100 may include ways to (1) conduct root cause analysis and disambiguation (e.g., detect deviations due to communication failures, new load balancing configuration, or an attack to application data); (2) isolate communications to/from a given service (e.g., microservice 104f in FIG. 1 or any other microservice); and/or (3) infer malicious behavior and notify the need to update the attack vector and attack path knowledge base.

Although FIG. 1 illustrates a particular number of components of system 100, this disclosure contemplates any suitable number of components. Although FIG. 1 illustrates a particular arrangement of the components of system 100, this disclosure contemplates any suitable arrangement of the components. Furthermore, although FIG. 1 describes and illustrates particular components, devices, or systems carrying out particular actions, this disclosure contemplates any suitable combination of any suitable components, devices, or systems carrying out any suitable actions.

FIG. 2 illustrates an example preemptive system 200 for detecting attack vectors for application data 106. System 200 may include the plurality of microservices 104 located on the cloud infrastructure 102, a context generator 202, a context catalog 204, a span inspector module 206, a local database 208, and a telemetry unit 210.

In the illustrated embodiment of FIG. 2, microservices 104a through 104f may be endowed with a distributed Incident Detection (ID) processor 212 with local access to the context catalog 204. The context catalog 204 may store one or more contexts 214 generated by the context generator 202. In embodiments, the context generator 202 may receive signals associated with a span for an invoked service call on the cloud infrastructure 102 and may store the span as one of the one or more contexts 214 for a given microservice 104. The context generator 202 may receive said signals from via the telemetry unit 210. In embodiments, the telemetry unit 210 may employ one or more scanners and/or collectors to collect and communicate the signals between the microservices 104.

Each ID processor 212 may provide ways to inject, propagate, and/or extract the learned contexts 214 (e.g., by instrumentation in the application service). In certain embodiments, ID processors 212 may: (1) receive telemetry information and know which context 214 invoked the service (e.g., information available from the context catalog 204); (2) mark spans when context 214 is unknown or unexpected and/or flag them for inspection; and/or (3) isolate and/or block invocations/communications outside of known contexts 214 (e.g., by pushing filters to sidecars or by an alternative means).

In embodiments, both the context generator 202 and the span inspector module 206 may be communicatively coupled to the telemetry unit 210. Span inspector module 206 may: (4) receive the spans marked for inspection from telemetry unit 210; (5) analyze and/or determine if the incident should be classified as an attack; (6) if the incident should not be classified as an attack, remove the mark from the span, otherwise, query the local database 208 for the attack vector knowledge base; (7) analyze and determine if the incident is rooted on a known attack vector / attack path (hence requiring prioritization) or belongs to a new category for which there is no known vector; and/or (8) when applicable, notify the need for creating new attack vectors in the local database 208. In embodiments, the local database 208 may be configured to store known attack vectors or attack paths.

Although FIG. 2 illustrates a particular number of components of system 200, this disclosure contemplates any suitable number of components. Although FIG. 2 illustrates a particular arrangement of the components of system 200, this disclosure contemplates any suitable arrangement of the components. Furthermore, although FIG. 2 describes and illustrates particular components, devices, or systems carrying out particular actions, this disclosure contemplates any suitable combination of any suitable components, devices, or systems carrying out any suitable actions.

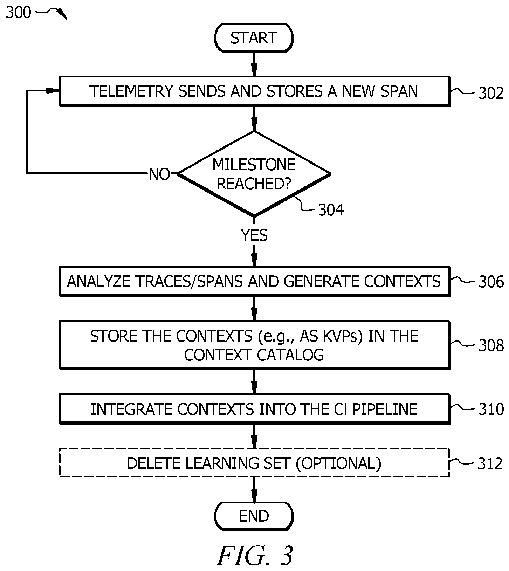

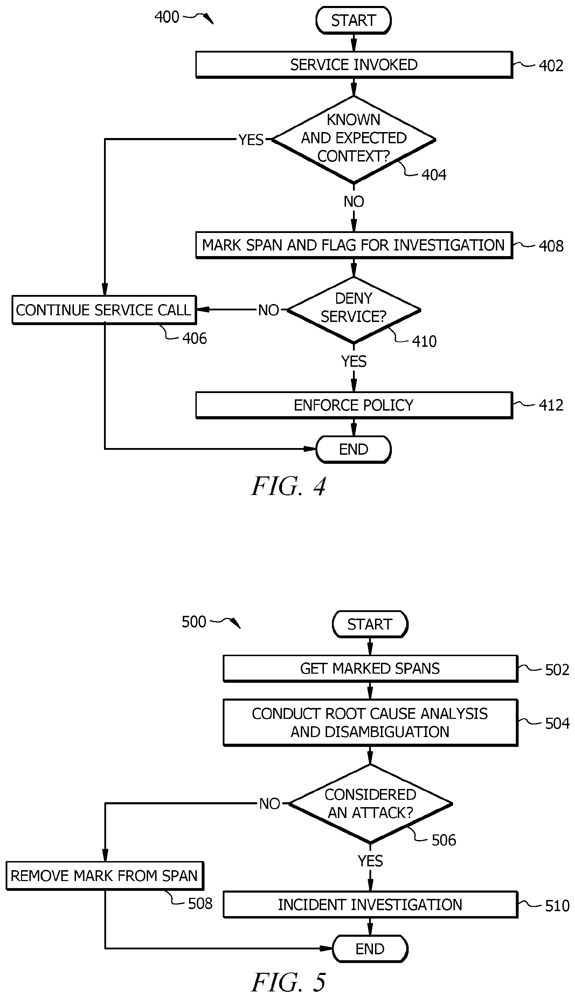

FIGs. 3-6 illustrate example methods for leveraging telemetry to detect vulnerabilities. FIG. 3 illustrates a method 300 performed by context generator 202 of FIG. 2 during a learning phase. FIG. 4 illustrates a method 400 performed by distributed ID processors 212 of FIG. 2. FIGs. 5-6 illustrate a method 500, 600 performed by span inspector module 206 of FIG. 2.

Method 300 of FIG. 3 may include the following steps. Method 300 may initiate at step 302 with the telemetry unit 210 (referring to FIG. 2) sending and storing a new span. At step 304 of method 300, the context generator 202 may determine whether a milestone has been reached. A milestone may be reached: (1) by manual finish of the learning phase (at the end of continuous integration and continuous delivery/continuous deployment (CI/CD) testing cycle); (2) after a certain number of samples; (3) after a time period, or any other suitable milestone. If the milestone has been reached, method 300 moves from step 304 to step 306. Otherwise, the method 300 proceeds back to step 302.

At step 306 of method 300, traces/spans may be analyzed and contexts 214 (referring to FIG. 2) may be generated. In certain embodiments, this may be implemented as a variation of unsupervised learning such as a K-Means clustering algorithm run to extract centroids (contexts) from collected data samples (spans). In some embodiments, this may be seeded by running certain telemetry spans in a privileged mode (e.g., admin flag/certificate) denoting a new span as the "golden run," which may be automatically approved. Method 300 then may proceed from step 306 to step 308.

At step 308 of method 300, contexts 214 may be stored in the context catalog 204 (referring to FIG. 2). In some embodiments, storing contexts 214 may represent persisting the contexts 214 in a database and/or in memory databases accessible by ID processors 212. In certain embodiments, storing contexts 214 may include storing KVPs and any additional metadata needed for context description (e.g., signed/attestable member lists, etc.). Method 300 then proceeds from step 308 to step 310.

At step 310 of method 300, the contexts 214 may be integrated into the CI pipeline. After storing contexts 214 and generating appropriate key-value pairs, each service may receive encoded at build time with context KVP values that it should expect to see when invoked at run-time. In certain embodiments, after integrating the contexts into the CI pipeline, the learning set may be deleted in an optional step 312. Method 300 then proceeds to end.

Method 400 of FIG. 4 may include the following steps. Method 400 may initiate at step 402 with invoking a service. At step 402, a service call may be invoked for any one of the microservices 104 (referring to FIGs. 1-2). At step 404 of method 400, the distributed ID processors 212 (referring to FIG. 2) may each determine whether the service belongs to one of the contexts 214 (referring to FIG. 2) stored in the context catalog 204 (referring to FIG. 2). For example, a whitelist instrumentation may compare the context identifier in the request's header to a list of known contexts 214 which access the microservice 104 (e.g., retrieved from the context catalog 204 in memory). In certain embodiments, contexts 214 may include a list of members (e.g., in the form of required signatures of earlier service steps present in the header). Techniques such as hashing and/or forward signing contexts within tracing information in the telemetry may substantially reduce the attack surface for the application data 106 (referring to FIG. 1). In some cases, the context 214 may be known but it may have been propagated through an unexpected predecessor (e.g., due to a failure, redirection, and retry process, due to a new load balancing process, due to an attack, etc.).

If, at step 404, the service belongs to a known and expected context, the service call is continued at step 406. If, at step 404, the service does not belong to a known and expected context, method 400 moves from step 404 to step 408, where the span is flagged for investigation. In certain embodiments, the service detecting a misbehavior adds a metadata flag to the span. In some embodiments, telemetry collection backend of telemetry unit 210 may accept all spans and stores the spans. In certain embodiments, the span inspector module 206 may sit behind the telemetry collection and reacts to marked spans. Method 400 may then proceed from step 408 to step 410.

At step 410 of method 400, a determination may be made as to whether any services should be denied. For example, a service denial/rule enforcement may be used to deny unknown contexts. If, at step 410, the service is not denied, the service call is continued at step 406. If, at step 410, the service is denied, the distributed ID processors 212 may enforce the policy at a step 412. Method 400 then may proceed to end.

Method 500 of FIG. 5 may include the following steps. Method 500 may begin at step 502 with the span inspector module 206 receiving marked spans. In embodiments, the received marked spans have each been flagged for inspection. At step 504, span inspector module 206 may conduct a root cause analysis to determine if the incident that flagged the marked span should be classified as an attack. Various possible operations might be conducted by the span inspector module 206 to this end. For example, additional telemetry and operational information may be collected to detect unusual events, such as services not responding, redirections, and retries, which might correspond to valid behavior programmed in the application services but not necessarily captured by the context generator 202 (referring to FIG. 2) during the learning phase. As another example, a new load balancing process may be enforced without having yet retrained the incident detection processes. Hence, such traffic redirection might also correspond to valid patterns that are not yet captured by the context generator 202. Additional operational information and correlation analysis may help with identifying valid situations that were not captured during the learning phase.

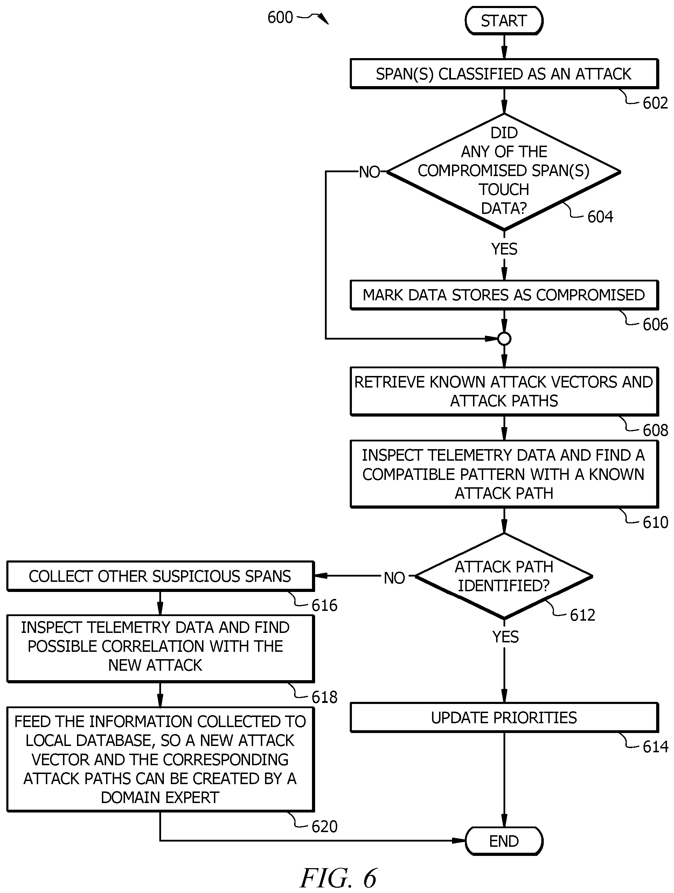

At step 506, the span inspector module 206 may may determine if the marked span is an attack, based on the results of step 504. If the incident is not considered an attack, the mark and/or flag may be removed from the span at step 508. If the incident is considered an attack, method 500 then proceeds from step 506 to step 510. At step 510, an incident investigation may be performed (i.e., wherein method 600 of FIG. 6 is illustrative of an incident investigation). Method 500 may then proceed to end. Step 510 is described in more detail in FIG. 6.

Method 600 of FIG. 6 may illustrate step 510 of FIG. 5 and may include the following steps. Method 600 may begin at step 602 with one or more spans being classified as an attack. At step 604, if any of the compromised spans touched data (such as application data 106), method 600 moves to step 606, where the data stores are marked as compromised. For example, the span inspector module 206 may have access to the span store from the telemetry collection backend of telemetry unit 210 (referring to FIG. 2). As another example, the span inspector module 206 may check all steps present in the span involving data read/writes. As still another example, the span inspector module 206 may interact with a data security posture management (DSPM), a data inventory or data control tool, an application security solution, and/or the like to indicate or mark certain data sources as compromised. As yet another example, the span inspector module 206 may notify the corresponding data controller and/or processor about the issue. Method 600 then moves to step 608.

At step 608, known attack vectors and attack paths may be retrieved. For example, the span inspector module 206 may retrieve information from security profiles stored in a database (e.g., local database 208). At step 610, the telemetry information may be inspected to find a compatible pattern with a known attack path. For example, the span inspector module 206 may look for an intersection between the steps present in the context 214 (referring to FIG. 2) flagged for inspection and known (possible) points of attack.

If, at step 612, an attack path is identified, method 600 moves from step 612 to step 614, where priorities may be updated. For example, the span investigation process may raise the priority and severity of the identified attack path in the local database 208, as the identified attack path is being actively exploited. Method 600 may then end. If, at step 612, an attack path is not identified, method 600 proceeds from step 612 to step 616, where other suspicious spans may be collected.

At step 618, the span inspector module 206 may inspect the telemetry data or information and find possible correlations with the new attack. For example, the span inspector module 206 may collect other suspicious spans and/or check for any other spans marked for investigation. Method 600 then proceeds to step 620, where collected information may be fed to the database (e.g., local database 208) such that new attack vector and the corresponding attack paths may be created by a domain expert. For example, the span inspector module 206 may notify the need for creating a new attack vector and the corresponding (new) attack paths. Method 600 then proceeds to end. In certain embodiments, potential attacks to the telemetry and/or instrumentation process may be mitigated and proactively captured as "known" attack vectors to the CI/CD pipeline (at build /deploy time).

Although this disclosure describes and illustrates particular steps for the methods of FIGs. 3-6 as occurring in a particular order, this disclosure contemplates any suitable steps for the methods of FIGs. 3-6 occurring in any suitable order. Although this disclosure describes and illustrates an example method for leveraging telemetry to detect vulnerabilities including the particular steps of method 300, 400, 500, and 600, this disclosure contemplates any suitable method for leveraging telemetry to detect vulnerabilities including any suitable steps, which may include all, some, or none of the steps of method 300, 400, 500, and 600, where appropriate. Furthermore, although FIGs. 3-6 describe and illustrate particular components, devices, or systems carrying out particular actions, this disclosure contemplates any suitable combination of any suitable components, devices, or systems carrying out any suitable actions.

Technical advantages of certain embodiments of this disclosure may include one or more of the following. This disclosure describes systems and methods that capture, catalog, encode, instrument, and/or propagate attestable contexts when application services (such as microservices 104) interact with sensitive data at rest and/or in-memory databases. Certain systems and methods described herein allow contextual analysis and deterministic detection of unclassified service call patterns (e.g., deviations from known/classified contexts). Certain embodiments of this disclosure automatically check for contexts on service invocation, and upon detecting an unexpected behavior, take further actions. The further actions may include conducting root cause analysis and disambiguation to determine if the incident should be classified as an attack, reprioritizing known attack vectors/paths that are being exploited, notifying the need to create new attack vectors when there are no attack vectors in the knowledge base matching the current attack detected, and the like.

Other technical advantages will be readily apparent to one skilled in the art from the following figures, descriptions, and claims. Moreover, while specific advantages have been enumerated above, various embodiments may include all, some, or none of the enumerated advantages.

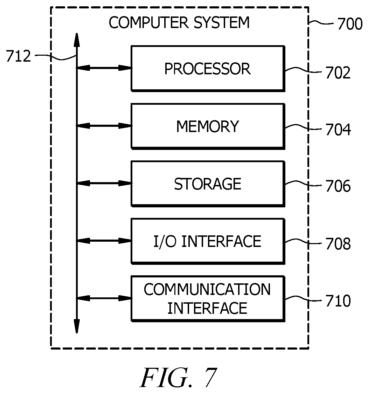

FIG. 7 illustrates an example computer system 700. In particular embodiments, one or more computer systems 700 perform one or more steps of one or more methods described or illustrated herein. In particular embodiments, one or more computer systems 700 provide functionality described or illustrated herein. In particular embodiments, software running on one or more computer systems 700 performs one or more steps of one or more methods described or illustrated herein or provides functionality described or illustrated herein. Particular embodiments include one or more portions of one or more computer systems 700. Herein, reference to a computer system may encompass a computing device, and vice versa, where appropriate. Moreover, reference to a computer system may encompass one or more computer systems, where appropriate. In one or more embodiments, the context generator 202 (referring to FIG. 2) and/or the span inspector module 206 (referring to FIG. 2) may utilize or function as one or more computer systems 700.

This disclosure contemplates any suitable number of computer systems 700. This disclosure contemplates computer system 700 taking any suitable physical form. As example and not by way of limitation, computer system 700 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 700 may include one or more computer systems 700; be unitary or distributed; span multiple locations; span multiple machines; span multiple data centers; or reside in a cloud, which may include one or more cloud components in one or more networks. Where appropriate, one or more computer systems 700 may perform without substantial spatial or temporal limitation one or more steps of one or more methods described or illustrated herein. As an example, and not by way of limitation, one or more computer systems 700 may perform in real time or in batch mode one or more steps of one or more methods described or illustrated herein. One or more computer systems 700 may perform at different times or at different locations one or more steps of one or more methods described or illustrated herein, where appropriate.

In particular embodiments, computer system 700 includes a processor 702, a memory 704, a storage 706, an input/output (I/O) interface 708, a communication interface 710, and a bus 712. Although this disclosure describes and illustrates a particular computer system having a particular number of particular components in a particular arrangement, this disclosure contemplates any suitable computer system having any suitable number of any suitable components in any suitable arrangement.

In particular embodiments, processor 702 includes hardware for executing instructions, such as those making up a computer program. As an example and not by way of limitation, to execute instructions, processor 702 may retrieve (or fetch) the instructions from an internal register, an internal cache, memory 704, or storage 706; decode and execute them; and then write one or more results to an internal register, an internal cache, memory 704, or storage 706. In particular embodiments, processor 702 may include one or more internal caches for data, instructions, or addresses. This disclosure contemplates processor 702 including any suitable number of any suitable internal caches, where appropriate. As an example and not by way of limitation, processor 702 may include one or more instruction caches, one or more data caches, and one or more translation lookaside buffers (TLBs). Instructions in the instruction caches may be copies of instructions in memory 704 or storage 706, and the instruction caches may speed up retrieval of those instructions by processor 702. Data in the data caches may be copies of data in memory 704 or storage 706 for instructions executing at processor 702 to operate on; the results of previous instructions executed at processor 702 for access by subsequent instructions executing at processor 702 or for writing to memory 704 or storage 706; or other suitable data. The data caches may speed up read or write operations by processor 702. The TLBs may speed up virtual-address translation for processor 702. In particular embodiments, processor 702 may include one or more internal registers for data, instructions, or addresses. This disclosure contemplates processor 702 including any suitable number of any suitable internal registers, where appropriate. Where appropriate, processor 702 may include one or more arithmetic logic units (ALUs); be a multi-core processor; or include one or more processors 702. Although this disclosure describes and illustrates a particular processor, this disclosure contemplates any suitable processor.

In particular embodiments, memory 704 includes main memory for storing instructions for processor 702 to execute or data for processor 702 to operate on. As an example and not by way of limitation, computer system 700 may load instructions from storage 706 or another source (such as, for example, another computer system 700) to memory 704. Processor 702 may then load the instructions from memory 704 to an internal register or internal cache. To execute the instructions, processor 702 may retrieve the instructions from the internal register or internal cache and decode them. During or after execution of the instructions, processor 702 may write one or more results (which may be intermediate or final results) to the internal register or internal cache. Processor 702 may then write one or more of those results to memory 704. In particular embodiments, processor 702 executes only instructions in one or more internal registers or internal caches or in memory 704 (as opposed to storage 706 or elsewhere) and operates only on data in one or more internal registers or internal caches or in memory 704 (as opposed to storage 706 or elsewhere). One or more memory buses (which may each include an address bus and a data bus) may couple processor 702 to memory 704. Bus 712 may include one or more memory buses, as described below. In particular embodiments, one or more memory management units (MMUs) reside between processor 702 and memory 704 and facilitate accesses to memory 704 requested by processor 702. In particular embodiments, memory 704 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 704 may include one or more memories 704, where appropriate. Although this disclosure describes and illustrates particular memory, this disclosure contemplates any suitable memory.

In particular embodiments, storage 706 includes mass storage for data or instructions. As an example and not by way of limitation, storage 706 may include a hard disk drive (HDD), a floppy disk drive, flash memory, an optical disc, a magneto-optical disc, magnetic tape, or a Universal Serial Bus (USB) drive or a combination of two or more of these. Storage 706 may include removable or non-removable (or fixed) media, where appropriate. Storage 706 may be internal or external to computer system 700, where appropriate. In particular embodiments, storage 706 is non-volatile, solid-state memory. In particular embodiments, storage 706 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 706 taking any suitable physical form. Storage 706 may include one or more storage control units facilitating communication between processor 702 and storage 706, where appropriate. Where appropriate, storage 706 may include one or more storages 706. Although this disclosure describes and illustrates particular storage, this disclosure contemplates any suitable storage.

In particular embodiments, I/O interface 708 includes hardware, software, or both, providing one or more interfaces for communication between computer system 700 and one or more I/O devices. Computer system 700 may include one or more of these I/O devices, where appropriate. One or more of these I/O devices may enable communication between a person and computer system 700. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 708 for them. Where appropriate, I/O interface 708 may include one or more device or software drivers enabling processor 702 to drive one or more of these I/O devices. I/O interface 708 may include one or more I/O interfaces 708, where appropriate. Although this disclosure describes and illustrates a particular I/O interface, this disclosure contemplates any suitable I/O interface.

In particular embodiments, communication interface 710 includes hardware, software, or both providing one or more interfaces for communication (such as, for example, packet-based communication) between computer system 700 and one or more other computer system 700 or one or more networks. As an example and not by way of limitation, communication interface 710 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 710 for it. As an example and not by way of limitation, computer system 700 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 700 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 700 may include any suitable communication interface 710 for any of these networks, where appropriate. Communication interface 710 may include one or more communication interfaces 710, where appropriate. Although this disclosure describes and illustrates a particular communication interface, this disclosure contemplates any suitable communication interface.

In particular embodiments, bus 712 includes hardware, software, or both coupling components of computer system 700 to each other. As an example and not by way of limitation, bus 712 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 712 may include one or more buses 712, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend within the scope of the claims. The scope of the claims is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

The embodiments disclosed herein are only examples, and the scope of this disclosure is not limited to them. Particular embodiments may include all, some, or none of the components, elements, features, functions, operations, or steps of the embodiments disclosed herein within the scope of the appended claims. Embodiments disclosed herein include a method, an apparatus, a storage medium, a system and a computer program product, wherein any feature mentioned in one category, e.g., a method, can be applied in another category, e.g., a system, as well.

## Claims

1. Apparatus (700) comprising:
means for receiving (502) a marked span (108, 110, 112) that has been flagged for inspection, wherein the marked span is defined by one or more application services;
means for conducting (504) a root cause analysis to determine if the marked span should be classified as an attack;
means for determining (604), in response to a determination (506, 602) that the marked span should be classified as the attack, whether the marked span engaged with data corresponding to one or more application services defining the marked span; and
means for designating (606) the data corresponding to the one or more application services as compromised in response to a determination that the marked span did engage with said data.

2. The apparatus (700) of claim 1, further comprising:
means for removing (508) metadata corresponding to a flag for the marked span in response to a determination that the marked span should not be classified as the attack.

3. The apparatus (700) of claim 1 or 2, further comprising:
means for notifying an associated data controller in response to a determination that the marked span did engage with said data.

4. The apparatus (700) of any of claims 1 to 3, further comprising:
means for receiving telemetry information corresponding to invoking a service call to a first application service to access application data of a second application service; and
means for verifying whether a context identifier stored in a header of the first application service corresponds to a context stored in a context catalog.

5. The apparatus (700) of claim 4, further comprising:
means for inhibiting the invoked service call in response to a determination that the context identifier stored in the header of the first application service does not correspond to the context stored in the context catalog.

6. The apparatus (700) of any of claims 1 to 5, further comprising means for accessing a local database storing one or more known attack vectors.

7. The apparatus (700) of claim 6, further comprising:
means for comparing the marked span to the one or more known attack vectors for overlapping points of attack; and
means for generating a new attack vector based on the marked span for storage in the local database.

8. A computer-implemented method (500, 600) for detecting an unknown attack vector, comprising:
receiving (502) a marked span that has been flagged for inspection, wherein the marked span is defined by one or more application services;
conducting (504) a root cause analysis to determine if the marked span should be classified as an attack;
in response to a determination (506, 602) that the marked span should be classified as the attack, determining (604) whether the marked span engaged with data corresponding to one or more application services defining the marked span; and
designating (606) the data corresponding to the one or more application services as compromised in response to a determination that the marked span did engage with said data.

9. The computer-implemented method (500) of claim 8, further comprising:
in response to a determination that the marked span should not be classified as the attack, removing (508) metadata corresponding to a flag for the marked span.

10. The computer-implemented method (500) of claim 8 or 9, further comprising:
notifying an associated data controller in response to a determination that the marked span did engage with said data.

11. The computer-implemented method (500) of any of claims 8 to 10, further comprising:
receiving telemetry information corresponding to invoking a service call to a first application service to access application data of a second application service; and
verifying whether a context identifier stored in a header of the first application service corresponds to a context stored in a context catalog.

12. The computer-implemented method (500) of claim 11, further comprising:
inhibiting the invoked service call in response to a determination that the context identifier stored in the header of the first application service does not correspond to the context stored in the context catalog.

13. The computer-implemented method (500) of any of claims 8 to 12, further comprising:
accessing a local database storing one or more known attack vectors.

14. The computer-implemented method (500) of claim 13, further comprising:
comparing the marked span to the one or more known attack vectors for overlapping points of attack; and
generating a new attack vector based on the marked span for storage in the local database.

15. A computer program, computer program product or computer readable medium comprising instructions which, when executed by a computer, cause the computer to carry out the steps of the method (500) of any of claims 8 to 14.

## Patentansprüche

1. Einrichtung (700), die Folgendes umfasst:
ein Mittel zum Empfangen (502) einer markierten Spanne (108, 110, 112), die zur Inspektion gekennzeichnet wurde, wobei die markierte Spanne durch einen oder mehrere Anwendungsdienste definiert ist;
ein Mittel zum Durchführen (504) einer Ursachenanalyse, um zu bestimmen, ob die markierte Spanne als Angriff klassifiziert werden sollte;
ein Mittel zum Bestimmen (604), als Reaktion auf eine Bestimmung (506, 602), dass die markierte Spanne als Angriff klassifiziert werden sollte, ob die markierte Spanne mit Daten in Eingriff stand, die einem oder mehreren Anwendungsdiensten entsprechen, die die markierte Spanne definieren; und
ein Mittel zum Bezeichnen (606) der Daten, die dem einen oder den mehreren Anwendungsdiensten entsprechen, als kompromittiert, als Reaktion auf eine Bestimmung, dass die markierte Spanne mit den genannten Daten in Eingriff stand.

2. Einrichtung (700) nach Anspruch 1, die ferner Folgendes umfasst:
ein Mittel zum Entfernen (508) von Metadaten, die einer Markierung für die markierte Spanne entsprechen, als Reaktion auf eine Bestimmung, dass die markierte Spanne nicht als der Angriff klassifiziert werden sollte.

3. Einrichtung (700) nach Anspruch 1 oder 2, die ferner Folgendes umfasst:
ein Mittel zum Benachrichtigen eines zugeordneten Datenkontrolleurs als Reaktion auf eine Bestimmung, dass die markierte Spanne mit den genannten Daten in Eingriff stand.

4. Einrichtung (700) nach einem der Ansprüche 1 bis 3, die ferner Folgendes umfasst:
ein Mittel zum Empfangen von Telemetrieinformationen, die dem Aufrufen eines Dienstaufrufs an einen ersten Anwendungsdienst entsprechen, um auf Anwendungsdaten eines zweiten Anwendungsdienstes zuzugreifen; und
ein Mittel zum Überprüfen, ob ein in einem Header des ersten Anwendungsdienstes gespeicherter Kontextidentifikator einem in einem Kontextkatalog gespeicherten Kontext entspricht.

5. Einrichtung (700) nach Anspruch 4, die ferner Folgendes umfasst:
ein Mittel zum Sperren des aufgerufenen Dienstaufrufs als Reaktion auf eine Bestimmung, dass der im Header des ersten Anwendungsdienstes gespeicherte Kontextidentifikator nicht dem im Kontextkatalog gespeicherten Kontext entspricht.

6. Einrichtung (700) nach einem der Ansprüche 1 bis 5, die ferner ein Mittel zum Zugreifen auf eine lokale Datenbank umfasst, in der ein oder mehrere bekannte Angriffsvektoren gespeichert sind.

7. Einrichtung (700) nach Anspruch 6, die ferner Folgendes umfasst:
ein Mittel zum Vergleichen der markierten Spanne mit dem einen oder den mehreren bekannten Angriffsvektoren für überlappende Angriffspunkte; und
ein Mittel zum Erzeugen eines neuen Angriffsvektors basierend auf der markierten Spanne zur Speicherung in der lokalen Datenbank.

8. Computerimplementiertes Verfahren (500, 600) zum Erfassen eines unbekannten Angriffsvektors, das Folgendes umfasst:
Empfangen (502) einer markierten Spanne, die zur Inspektion gekennzeichnet wurde, wobei die markierte Spanne durch einen oder mehrere Anwendungsdienste definiert ist;
Durchführen (504) einer Ursachenanalyse, um zu bestimmen, ob die markierte Spanne als Angriff klassifiziert werden sollte;
als Reaktion auf eine Bestimmung (506, 602), dass die markierte Spanne als Angriff klassifiziert werden sollte, Bestimmen (604), ob die markierte Spanne mit Daten in Eingriff stand, die einem oder mehreren Anwendungsdiensten entsprechen, die die markierte Spanne definieren; und
Bezeichnen (606) der Daten, die dem einen oder den mehreren Anwendungsdiensten entsprechen, als kompromittiert, als Reaktion auf eine Bestimmung, dass die markierte Spanne mit den genannten Daten in Eingriff stand.

9. Computerimplementiertes Verfahren (500) nach Anspruch 8, das ferner Folgendes umfasst:
als Reaktion auf eine Bestimmung, dass die markierte Spanne nicht als der Angriff klassifiziert werden sollte,
Entfernen (508) von Metadaten, die einem Kennzeichen für die markierte Spanne entsprechen.

10. Computerimplementiertes Verfahren (500) nach Anspruch 8 oder 9, das ferner Folgendes umfasst:
Benachrichtigen eines zugeordneten Datenkontrolleurs als Reaktion auf eine Bestimmung, dass die markierte Spanne mit den genannten Daten in Eingriff stand.

11. Computerimplementiertes Verfahren (500) nach einem der Ansprüche 8 bis 10, das ferner Folgendes umfasst:
Empfangen von Telemetrieinformationen, die dem Aufrufen eines Dienstaufrufs an einen ersten Anwendungsdienst entsprechen, um auf Anwendungsdaten eines zweiten Anwendungsdienstes zuzugreifen; und Überprüfen, ob ein in einem Header des ersten Anwendungsdienstes gespeicherter Kontextidentifikator einem in einem Kontextkatalog gespeicherten Kontext entspricht.

12. Computerimplementiertes Verfahren (500) nach Anspruch 11, das ferner Folgendes umfasst:
Sperren des aufgerufenen Dienstaufrufs als Reaktion auf eine Bestimmung, dass der im Header des ersten Anwendungsdienstes gespeicherte Kontextidentifikator nicht dem im Kontextkatalog gespeicherten Kontext entspricht.

13. Computerimplementiertes Verfahren (500) nach einem der Ansprüche 8 bis 12, das ferner Folgendes umfasst:
Zugreifen auf eine lokale Datenbank, die einen oder mehrere bekannte Angriffsvektoren speichert.

14. Computerimplementiertes Verfahren (500) nach Anspruch 13, das ferner Folgendes umfasst:
Vergleichen der markierten Spanne mit dem einen oder den mehreren bekannten Angriffsvektoren für überlappende Angriffspunkte; und
Erzeugen eines neuen Angriffsvektors basierend auf der markierten Spanne zur Speicherung in der lokalen Datenbank.

15. Computerprogramm, Computerprogrammprodukt oder computerlesbares Medium, das Anweisungen umfasst, die, wenn sie von einem Computer ausgeführt werden, den Computer veranlassen, die Schritte des Verfahrens (500) nach einem der Ansprüche 8 bis 14 auszuführen.

## Revendications

1. Appareil (700) comprenant :
un moyen de réception (502) d'une plage marquée (108, 110, 112) qui a été signalée pour inspection, dans lequel la plage marquée est définie par un ou plusieurs services d'application ;
un moyen de réalisation (504) d'une analyse de causes profondes afin de déterminer que la plage marquée devrait ou non être classée comme une attaque ;
un moyen de détermination (604), en réponse à une détermination (506, 602) que la plage marquée devrait être classée comme l'attaque, que la plage marquée a interagi ou non avec des données correspondant à un ou plusieurs services d'application définissant la plage marquée ; et
un moyen de désignation (606) des données correspondant aux un ou plusieurs services d'application comme compromises en réponse à une détermination que la plage marquée a effectivement interagi avec lesdites données.

2. Appareil (700) selon la revendication 1, comprenant en outre :
un moyen de suppression de métadonnées (508) correspondant à un indicateur de la plage marquée en réponse à une détermination que la plage marquée ne devrait pas être classée comme l'attaque.

3. Appareil (700) selon la revendication 1 ou 2, comprenant en outre :
un moyen de notification à un contrôleur de données associé en réponse à une détermination que la plage marquée a effectivement interagi avec lesdites données.

4. Appareil (700) selon l'une quelconque des revendications 1 à 3, comprenant en outre :
un moyen de réception d'informations de télémesure correspondant à l'appel d'un appel de service d'un premier service d'application pour accéder à des données d'application d'un second service d'application ; et
un moyen de vérification qu'un identifiant de contexte stocké dans un en-tête du premier service d'application correspond ou non à un contexte stocké dans un catalogue de contextes.

5. Appareil (700) selon la revendication 4, comprenant en outre :
un moyen d'inhibition de l'appel de service appelé en réponse à une détermination que l'identifiant de contexte stocké dans l'en-tête du premier service d'application ne correspond pas au contexte stocké dans le catalogue de contextes.

6. Appareil (700) selon l'une quelconque des revendications 1 à 5, comprenant en outre un moyen d'accès à une base de données locale stockant un ou plusieurs vecteurs d'attaque connus.

7. Appareil (700) selon la revendication 6, comprenant en outre :
un moyen de comparaison de la plage marquée à un ou plusieurs vecteurs d'attaque connus pour des points d'attaque qui se chevauchent ; et
un moyen de génération d'un nouveau vecteur d'attaque sur la base de la plage marquée pour son stockage dans la base de données locale.

8. Procédé mis en œuvre par ordinateur (500, 600) pour détecter un vecteur d'attaque inconnu, comprenant :
la réception (502) d'une plage marquée qui a été signalée pour inspection, dans lequel la plage marquée est définie par un ou plusieurs services d'application ;
la réalisation (504) d'une analyse de causes profondes pour déterminer que la plage marquée devrait ou non être classée comme une attaque ;
en réponse à une détermination (506, 602) que la plage marquée devrait être classée comme l'attaque, la détermination (604) que la plage marquée a interagi ou non avec des données correspondant à un ou plusieurs services d'application définissant la plage marquée ; et
la désignation (606) des données correspondant aux un ou plusieurs services d'application comme compromises en réponse à une détermination que la plage marquée a effectivement interagi avec lesdites données.

9. Procédé mis en œuvre par ordinateur (500) selon la revendication 8, comprenant en outre :
en réponse à une détermination que la plage marquée ne devrait pas être considérée comme l'attaque,
la suppression de métadonnées (508) correspondant à un indicateur de la plage marquée.

10. Procédé mis en œuvre par ordinateur (500) selon la revendication 8 ou 9, comprenant en outre :
la notification à un contrôleur de données associé en réponse à une détermination que la plage marquée a effectivement interagi avec lesdites données.

11. Procédé mis en œuvre par ordinateur (500) selon l'une quelconque des revendications 8 à 10, comprenant en outre :
la réception d'informations de télémesure correspondant à l'appel d'un appel de service d'un premier service d'application pour accéder à des données d'application d'un second service d'application ; et
la vérification qu'un identifiant de contexte stocké dans un en-tête du premier service d'application correspond ou non à un contexte stocké dans un catalogue de contextes.

12. Procédé mis en œuvre par ordinateur (500) selon la revendication 11, comprenant en outre :
l'inhibition de l'appel de service appelé en réponse à une détermination que l'identifiant de contexte stocké dans l'en-tête du premier service d'application ne correspond pas au contexte stocké dans le catalogue de contextes.

13. Procédé mis en œuvre par ordinateur (500) selon l'une quelconque des revendications 8 à 12, comprenant en outre :
l'accès à une base de données locale stockant un ou plusieurs vecteurs d'attaque connus.

14. Procédé mis en œuvre par ordinateur (500) selon la revendication 13, comprenant en outre :
la comparaison de la plage marquée à un ou plusieurs vecteurs d'attaque connus pour des points d'attaque qui se chevauchent ; et
la génération d'un nouveau vecteur d'attaque sur la base de la plage marquée en vue de son stockage dans la base de données locale.

15. Programme d'ordinateur, produit de programme d'ordinateur ou support lisible par ordinateur comprenant des instructions qui, à leur exécution par un ordinateur, amènent l'ordinateur à entreprendre les étapes du procédé (500) selon l'une quelconque des revendications 8 à 14.
